# EUROPEAN PATENT SPECIFICATION

(11) **EP 2 771 569 B1**
(45) Date of publication and mention of the grant of the patent: **10.05.2017**
(21) Application number: 12783869.6
(22) Date of filing: 24.10.2012
(51) Int. Cl.: F03D 1/06

(54) **WIND TURBINE BLADE AND METHOD PROVIDING PASSIVE CONTROL FOR REDUCING AERODYNAMIC BLADE LOADING**
ROTORBLATT UND VERFAHREN FÜR PASSIVE STEUERUNG ZUR REDUZIERUNG DER BEANSPRUCHUNG EINER AERODYNAMISCHEN SCHAUFEL
PALE D'ÉOLIENNE ET PROCÉDÉ PERMETTANT DE FOURNIR UNE COMMANDE PASSIVE AFIN DE RÉDUIRE LES CHARGES AÉRODYNAMIQUES DE LA PALE

(30) Priority: 26.10.2011 US 201161551731 P; 24.11.2011 DK 201170647 P
(43) Date of publication of application: 03.09.2014
(73) Proprietor: Vestas Wind Systems A/S, 8200 Aarhus N (DK)
(72) Inventor: MORAN, Garrett, Houston, TX 77062 (US)
(74) Representative: Vestas Patents Department
(86) International application number: PCT/DK2012/050391
(87) International publication number: WO 2013/060332

(56) References cited:
- DE-A1-102005 059 298
- DE-A1-102008 048 857
- DE-U1-202011 051 341
- US-A1- 2009 169 392
- US-A1- 2010 296 941

## Description

### Technical Field

This application relates generally to wind turbines and, more particularly, to a wind turbine blade and associated method providing passive control for reducing the aerodynamic loading of a wind turbine blade through a creation or enhancement of a passive bend-twist coupling designed into the blade.

### Background

Wind turbines are used to produce electrical energy using a renewable resource and without combusting a fossil fuel. Generally, a wind turbine converts kinetic energy from the wind into mechanical energy and then subsequently converts the mechanical energy into electrical power. A horizontal-axis wind turbine includes a tower, a nacelle located at the apex of the tower, and a rotor that is supported in the nacelle. The rotor is coupled either directly or indirectly with a generator, which is housed inside the nacelle. The rotor includes a central hub and a plurality of blades (e.g., three blades) mounted thereto and extending radially therefrom. The blades may rotate relative to the hub so as to pitch the blades into or out of the wind.

The blades include an outer airfoil shell disposed about an inner spar. The outer airfoil shell is configured to provide the wind turbine blade with its aerodynamic features and characteristics (e.g., lift and drag performance) while the spar is configured to provide the strength and rigidity for supporting the loads imposed on the blade during operation. The outer airfoil shell includes an upper shell half and a lower shell half which mate along the leading and trailing edges to form the closed outer airfoil shell. The spar typically includes a generally cylindrical root section which morphs into a generally rectangular or box-like configuration in the direction of the blade tip. Along the rectangular or box-like portion, the spar includes an upper spar cap associated with the upper shell half, a lower spar cap associated with the lower shell half, and two spaced-apart shear webs that extend between the upper and lower spar caps at respective ends of the spar caps. Such a box-like configuration provides for a very strong and stiff support structure for the wind turbine blade.

The interaction of the wind with the wind turbine blades results in an aerodynamic loading of the blade. During normal operation of the wind turbine, the blades may be subject to severe loading conditions, including shear loads and bending loads, which may damage the blades. These severe loading conditions may, for example, be a result of unexpected wind gusts, turbulence, or other adverse atmospheric conditions.

To avoid damage to the blades, modern wind turbines often include various control systems that aim to reduce the negative consequences of severe blade loading conditions. For example, many wind turbine control systems implement an active control algorithm whereby the pitch of the blades may be manipulated to reduce the loading of the blades. In this regard, the control system may be operatively coupled to a pitch controller, which when activated, rotates the blades about their longitudinal axis. Such a rotation or pitching of the blades generally alters the angle of attack of the blades (i.e., the angle the blade makes with the oncoming wind), and thereby alters the aerodynamic loading of the blades.

While active control systems are generally successful for their intended purpose, interest has grown for passive control systems that, in essence, automatically alter the aerodynamic state of the blade so as to reduce the loading thereon without any input or activity from various active control systems. One approach for creating such a passive control system is to introduce a bend-twist coupling into the design of the blade. In a bend-twist coupling, the bending moment on the blade and the twist of the blade are coupled to each other to some degree, i.e., there is a functional relationship between the twist of the blade and the bending moment acting on the blade. In principle, when the bending moment on the blade starts increasing, the twisting moment on the blade correspondingly increases. The twisting moment, and the resulting twist, alters the aerodynamic state of the blade. In this regard, the blade may be designed such that the twist moves the blade to a position of reduced loading. For example, the twist may rotate the blade so as to have a lower angle of attack, and thus reduced aerodynamic loading of the blade.

One way to introduce a bend-twist coupling into a blade is by creating an eccentricity between the shear centers and the aerodynamic centers that extend along the length of the blade. The aerodynamic center is associated with a point of a blade section where a pitching moment on the blade section does not change when the angle of attack changes, and the shear center is associated with a point of the blade section where loading of that point produces no twist in the blade section. Accordingly, when these two points are separated by some amount, referred to as the eccentricity, loading of the blade section may result in a twisting moment that, for example, reduces the angle of attack of the blade section, which in turn reduces the loads imposed on the blade section and blade overall. The shear and aerodynamic centers may be formed on axes that extend from the root end of the blade toward the tip end, and may have localized values or locations along the length of the blade or global values for the blade as a whole. As used herein, the shear and aerodynamic centers refer to the localized values or locations along the length of the blade 20 and not the global values for the blade as a whole.

While such an approach may generally be effective for introducing a bend-twist coupling into the design of the blade, wind turbine manufacturers and blade manufacturers continually strive for improved and alternative designs that can achieve a bend-twist coupling or enhance the bend-twist coupling in a beneficial manner. Such improved or alternative designs provide a greater design choice in implementing a passive control strategy for selectively reducing the loading of wind turbine blades during severe atmospheric conditions.
US2009/169392 and DE202011051341 describe wind turbine blade that have a pair of shear webs that converge toward a tip of the blade. US2010/296941 describes a wind turbine blade with a spar cap formed of a first and second material (i.e. glass, carbon fibre) and the first material has a constant thickness over a section of the spar cap. DE102005059298 describes a wind turbine blade designed to passively attenuate wind loads.

### Summary

To address these and other issues, there is provided a wind turbine blade according to claim 1.

In one embodiment, the spar may further include a first spar cap associated with the upper shell half and a second spar cap associated with the lower shell half, wherein the first and second spar caps are coupled to the first and second shear webs so that the spar has a box-like configuration in at least a portion of the inner spar region, such as the portion adjacent the outer spar region. In an alternative embodiment, the first and second spar caps may be coupled to the first and second shear webs such that the shear webs are spaced from the edges of the spar caps.

In one embodiment, the first and second shear webs converge toward each other to form a single shear web in the outer spar region. The single shear web may align with a centerline of the spar. Alternatively, the single shear web may be spaced from the centerline of the spar and may be on either side thereof. In one embodiment, the spar includes a first spar cap associated with the upper shell half and a second spar cap associated with the lower shell half, wherein the single shear web is coupled to the first and second spar caps at a corresponding edge thereof. The corresponding edge may be that facing either the leading edge of trailing edge of the blade.

In another embodiment, the first and second shear webs converge toward each other in the outer spar region until the distance therebetween reaches a threshold value, at which point the distance between the first and second shear webs remains substantially constant. In one embodiment, in the portion of the outer spar region where the distance between the first and second shear webs remains substantially constant, a centerline between the first and second shear webs aligns with a center line of the spar. In an alternative embodiment, however, the centerline between the first and second shear webs is spaced from the centerline of the spar and may be on either side thereof. In one embodiment, the spar includes a first spar cap associated with the upper shell half and a second spar cap associated with the lower shell half, wherein one of the first or second shear webs is coupled to the first and second spar caps at a corresponding edge thereof. The corresponding edge may be that facing either the leading edge or trailing edge of the blade.

In a further embodiment, a wind turbine includes a tower, a nacelle located adjacent a top of the tower, and a rotor coupled to the nacelle and having a hub and a plurality of blades as described above extending therefrom.

According to a second aspect of the present invention there is provided a method of making a wind turbine blade according to claim 13.

The method may further comprise converging the first and second shear webs in the outer spar region so as to form a single shear web. Alternatively, the method may further comprise converging the first and second shear webs in the outer spar region until the distance therebetween reaches a threshold value, and maintaining the distance between the first and second shear webs substantially constant for at least a portion thereafter.

Still further, the method may additionally comprise moving the first shear web in the direction of the second shear web at a first rate, and moving the second shear web in the direction of the first shear web at a second rate.

### Brief Description of the Drawings

The accompanying drawings, which are incorporated in and constitute a part of this specification, illustrate various embodiments of the invention and, together with a general description of the invention given above and the detailed description of the embodiments given below, serve to explain the embodiments of the invention.
Fig. 1 is a diagrammatic perspective view of a wind turbine;
Fig. 2 is a perspective view of a wind turbine blade shown in Fig. 1;
Fig. 3 is a cross-sectional view of the wind turbine blade shown in Fig. 2 taken along line 3-3;
Fig. 4 is a cross-sectional view of the wind turbine blade shown in Fig. 2 taken along line 4-4 in an alternative embodiment;
Fig 5 is a partial cross-sectional view of the wind turbine blade shown in Fig 2 taken along line 5-5 illustrating a spar design in accordance with one example;
Fig. 6 is a partial cross-sectional view of the wind turbine blade shown in Fig. 5 taken along line 6-6;
Fig. 7 is a partial cross-sectional view of the wind turbine blade shown in Fig. 5 taken along line 6-6;
Fig. 8 is a schematic graphical representation of the spar design illustrated in Fig. 5;
Fig. 9 is a partial cross-sectional view of the wind turbine blade shown in Fig. 5 taken along line 9-9 illustrating an alternative example;
Fig. 10 is a schematic graphical representation of a spar design in accordance with another embodiment;
Fig. 11 is a partial cross-sectional view of a wind turbine blade similar to that shown in Fig. 5 illustrating a spar design in accordance with another example;
Fig. 12 is a partial cross-sectional view of the wind turbine blade shown in Fig. 11 taken along line 12-12;
Fig. 13 is a partial cross-sectional view of the wind turbine blade shown in Fig. 11 taken along line 13-13;
Fig. 14 is a partial cross-sectional view of the wind turbine blade shown in Fig. 11 taken along line 14-14 illustrating another embodiment;
Fig. 15 is a partial cross-sectional view of a wind turbine blade similar to that shown in Fig. 11 illustrating a spar design in accordance with another example;
Fig. 16 is a partial cross-sectional view of the wind turbine blade shown in Fig. 15 taken along line 16-16;
Fig. 17 is a partial cross-sectional view of the wind turbine blade shown in Fig. 15 taken along line 17-17;
Fig. 18 is a partial cross-sectional view of the wind turbine blade shown in Fig. 15 taken along line 18-18 in another example;
Fig. 19 is a partial cross-sectional view of a wind turbine blade illustrating a spar design in accordance with another embodiment;
Fig. 20 is a partial cross-sectional view of a wind turbine blade illustrating a spar design in accordance with another embodiment;
Fig. 21 is a partial cross-sectional view of a wind turbine blade illustrating a spar design in accordance with another embodiment;
Fig. 22 is a partial cross-sectional view of a wind turbine blade illustrating a spar design in accordance with another embodiment; and
Fig. 23 is a partial perspective cross-sectional view of a wind turbine blade illustrating a spar design having a preferential fiber orientation.

### Detailed Description

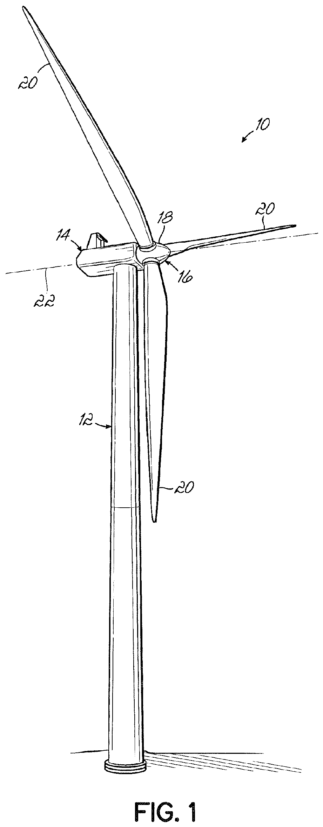

With reference to Fig. 1, a wind turbine 10 includes a tower 12, a nacelle 14 disposed at the apex of the tower 12, and a rotor 16 operatively coupled to a generator (not shown) housed inside the nacelle 14. In addition to the generator, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14 and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a plane substantially perpendicular to the wind direction. The rotor 16 of wind turbine 10 includes a central hub 18 and a plurality of blades 20 that project outwardly from the central hub 18 at locations circumferentially distributed thereabout. In the representative embodiment, the rotor 16 includes three blades 20, but the number may vary. The blades 20 are configured to interact with the passing air flow to produce lift that causes the central hub 18 to spin about a longitudinal axis 22.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator to the power grid as known to a person having ordinary skill in the art.

With reference to Figs. 1-3, a wind turbine blade 20 is configured as an elongate structure having, in an exemplary embodiment, an outer airfoil shell 24 disposed about an inner support element or spar 26. The outer shell 24 may be optimally shaped to give the blade 20 the desired aerodynamic properties to generate lift, while the spar 26 provides the structural aspects (e.g., strength, stiffness, etc.) to blade 20. The elongate blade 20 includes a first root end 28 which is configured to be coupled to the central hub 18 when mounted to rotor 16, and a tip end 30 longitudinally opposite to root end 28. As discussed above, the outer shell 24 includes a first, upper shell half 32 on the suction side of the blade 20, and a second, lower shell half 34 on the pressure side of the blade 20, the upper and lower shell halves 32, 34 being coupled together along a leading edge 36 and a trailing edge 38 located opposite one another across a chord c of the blade 20.

As noted above, the spar 26 includes a generally cylindrical or conical root section 40, an inner spar region 42, and an outer spar region 44. The root section 40 is immediately adjacent root end 28 and includes, for example, a generally circular cross-sectional shape adjacent an inner end thereof and a generally rectangular cross-sectional shape adjacent an outer end thereof. The root section 40 may be formed in a separate process and subsequently coupled to the inner spar region 42 which extends toward the tip end 30 of blade 20. The inner spar region 42 may comprise between about 0% to about 50% of the length of the spar 26, and the outer spar region 44 may comprise between about 50% and about 100% of the length of the spar 26. Of course, these ranges may vary depending on the specific application.

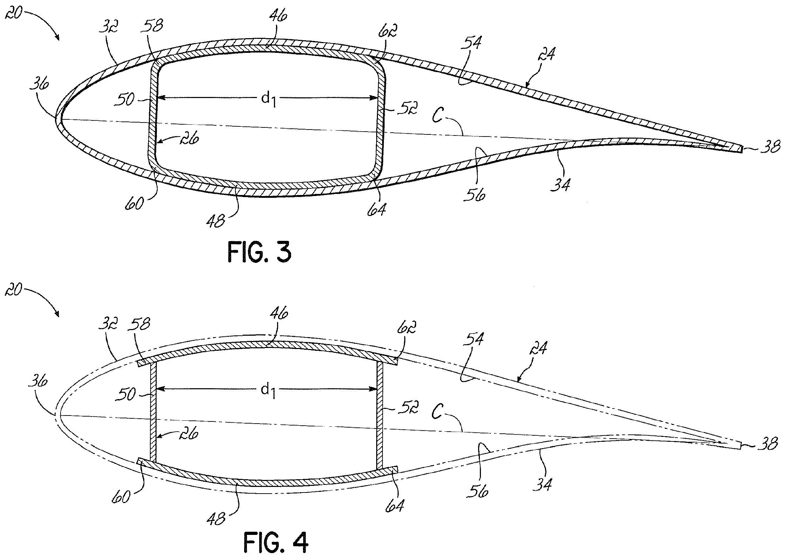

In one embodiment, as shown in Fig. 3, in the inner spar region 42, the spar 26 may have a generally rectangular or box-like configuration and include a first upper spar cap 46, a second lower spar cap 48 opposite the upper spar cap 46, a first shear web 50 generally extending between the upper and lower spar caps 46, 48 adjacent the leading edge 36, and a second shear web 52 opposite the first shear web 50 also generally extending between the upper and lower spar caps 46, 48 and adjacent the trailing edge 38. The upper and lower spar caps 46, 48 may be coupled or otherwise engage the inner surfaces 54, 56 of the upper and lower shell halves 32, 34, respectively, as illustrated in Fig. 3. Alternatively, the upper and lower spar caps 46, 48 may form a part of the outer shell 24 (not shown). The spar caps 46, 48 may be configured to generally bear or accommodate the aerodynamic bending loads imposed on blade 20.

In an exemplary embodiment, the first and second shear webs 50, 52 generally extend between the upper and lower spar caps 46, 48 along opposed ends or edges thereof. Thus, first shear web 50 extends between first ends 58, 60 of the first and second spar caps 46, 48, respectively. Similarly, second shear web 52 extends between second ends 62, 64 of the first and second spar caps 46, 48 respectively. Thus, in this embodiment, the spar 26, comprising the spar caps 46, 48 and shear webs 50, 52, has a generally rectangular cross-sectional shape. This box-like configuration provides excellent structural support of the blade 20. More particularly, this configuration may provide an optimum in torsional rigidity of the blade 20 (e.g., strongly resists twisting of the blade).

It should be noted that in the inner spar region 42, the first and second shear webs 50, 52 may separated by a distance d₁. In an example, the distance d₁ between the shear webs 50, 52 may be held generally fixed or constant for at least a portion of the inner spar region 42, such as a portion adjacent the outer spar region 44. For example and without limitation, the distance d₁ may be held constant at a value between about 25% chord and about 75% chord along at least a portion of the inner spar region 42. It should be recognized that other values are possible depending on the specific application and size of the blade.

Moreover, aspects of the invention are not limited to the distance d₁ being held constant in at least a portion of the inner spar region 42. For example, because the airfoil shape may become progressively smaller in a to the above example, the distance d₁ between the shear webs 50, 52 may be held constant in at least a portion of the inner spar region 42. Alternatively, the distance d₁ may vary in accordance with a predetermined relationship and/or scale on or otherwise relate to the chord c of the blade 20.

Although in some embodiments there may be a variation in the distance d₁ between shear webs 50, 52 in the inner spar region 42, this portion of the spar 26, and thus the blade 20, is configured to have a relatively high torsional rigidity so as to generally resist twisting of the blade 20 along this region. In accordance with one aspect of the invention, however, the torsional rigidity of the spar 26 may be reduced in the outer spar region 44 relative to the inner spar region 42 so as to provide for or enhance a bend-twist coupling in blade 20. In other words, in the outer spar region 44, the torsional rigidity is relaxed somewhat so as to permit or more easily permit the blade 20 to twist based on the bending loads imposed on the blade 20. As discussed above, the bend-twist coupling is a mechanism for providing a passive control for selectively reducing the loading of the blade 20. In accordance with an aspect of the invention, and in contrast to the more conventional approaches, in an exemplary embodiment the bend-twist coupling may be achieved or enhanced by primarily affecting the torsional rigidity of the blade 20.

In this regard and as noted above, the box-like configuration of the spar 26 along at least a portion of the inner spar region 42, and/or the relatively large distance d₁ between the shear webs 50, 52 in this region, provides a relatively high torsional rigidity to blade 20. In order to reduce or to the above embodiment, the distance d₁ between the shear webs 50, 52 may be held constant in at least a portion of the inner spar region 42. Alternatively, the distance d₁ may vary in accordance with a predetermined relationship and/or scale on or otherwise relate to the chord c of the blade 20.

Although according to the invention there is a variation in the distance d₁ between shear webs 50, 52 in the inner spar region 42, this portion of the spar 26, and thus the blade 20, is configured to have a relatively high torsional rigidity so as to generally resist twisting of the blade 20 along this region. In accordance with one aspect of the invention, however, the torsional rigidity of the spar 26 may be reduced in the outer spar region 44 relative to the inner spar region 42 so as to provide for or enhance a bend-twist coupling in blade 20. In other words, in the outer spar region 44, the torsional rigidity is relaxed somewhat so as to permit or more easily permit the blade 20 to twist based on the bending loads imposed on the blade 20. As discussed above, the bend-twist coupling is a mechanism for providing a passive control for selectively reducing the loading of the blade 20. In accordance with an aspect of the invention, and in contrast to the more conventional approaches, in an exemplary embodiment the bend-twist coupling may be achieved or enhanced by primarily affecting the torsional rigidity of the blade 20.

In this regard and as noted above, the box-like configuration of the spar 26 along at least a portion of the inner spar region 42, and/or the relatively large distance d₁ between the shear webs 50, 52 in this region, provides a relatively high torsional rigidity to blade 20. In order to reduce or relax the torsional rigidity of the blade 20 along the outer spar region 44, the distance between the shear webs 50, 52 may be reduced, and perhaps significantly reduced, such that, for example, the spar 26 moves toward a configuration of an I-beam, which has a reduced torsional rigidity compared to the box-like configuration. Thus, in accordance with various embodiments of the invention, the shear webs 50, 52 may be configured to converge toward each other in the outer spar region 44 to thereby reduce or eliminate the spacing between the shear webs.

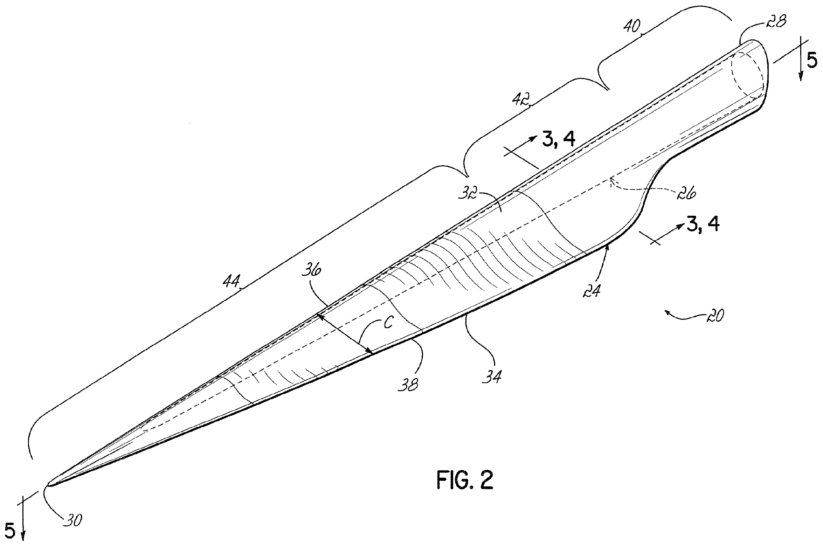

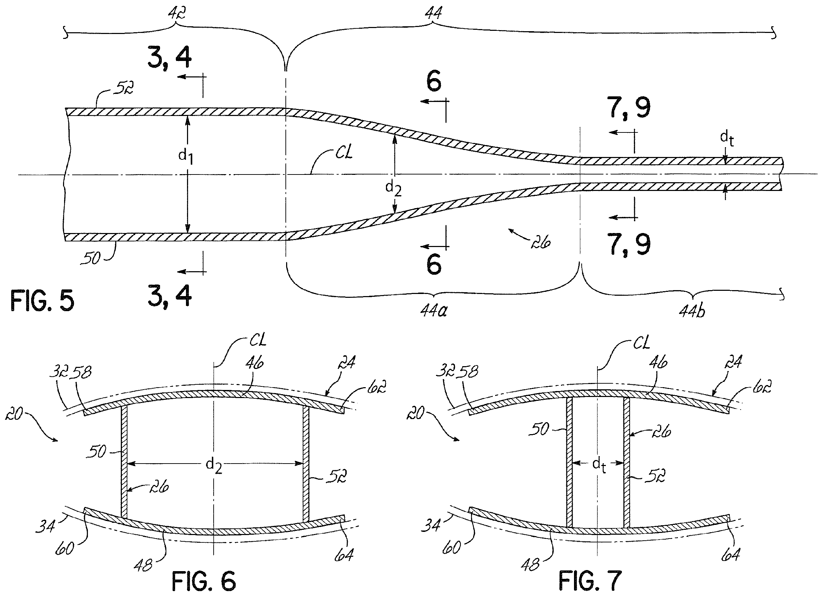

Fig. 5 illustrates a schematic, cross-sectional view of a portion of the blade 20 shown in Fig. 2 indicating one design of the shear webs 50, 52. In this example, the distance d₁ between the shear webs 50, 52 may be held generally constant in at least a portion of the inner spar region 42, and more particularly the portion adjacent the outer spar region 44. Thus, in cross section, the spar 26 may, for example, have a configuration similar to that shown in Fig. 3 or Fig. 4 and described above. As illustrated in Fig. 5, however, in the outer spar region 44, the shear webs 50, 52 may converge toward each other such that the distance between the shear webs 50, 52 decreases in a direction toward the tip end 30.

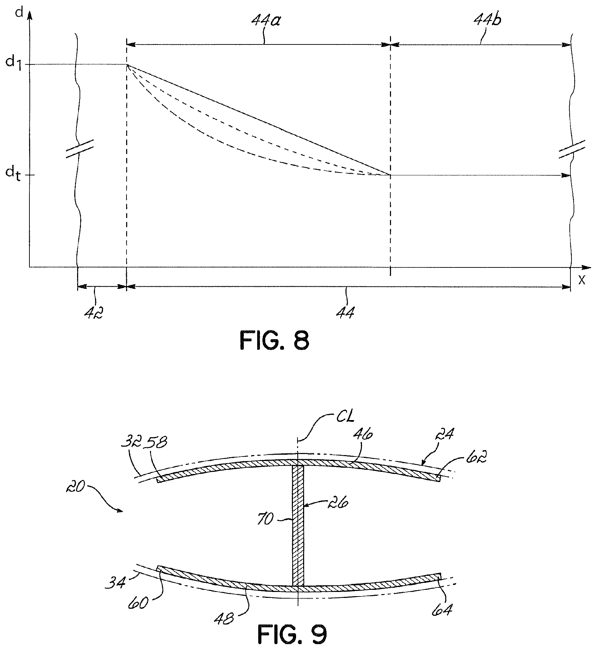

In this regard, Fig. 6 illustrates a cross-sectional view taken through the outer spar region 44. As can be seen, the distance d₂ between the shear webs 50, 52 has decreased relative to d₁ shown in Fig. 3, or alternatively Fig. 4. The convergence of the shear webs 50, 52 toward each other may be in accordance with a predetermined relationship. By way of example and not limitation, the distance d₂ may vary linearly in the outer spar region 44 and be characterized by a slope s₂ in the outer spar region 44 (e.g., d₂=s₂x). Other predetermined relationships may also exist and include, for example, a higher order polynomial relationship, an exponential relationship, or some other known or mathematically descriptive relationship. In one embodiment, for example, the distance d₂ between the shear webs 50, 52 may scale on or otherwise relate to the chord c. Fig. 8 illustrates various relationships for the convergence of the shear webs 50, 52 in the outer spar region 44.

In one embodiment, the shear webs 50, 52 may converge until the distance d₂ therebetween reaches a certain threshold value dₜ, which may be predetermined based on the desired behavior of blade 20. This convergence may occur, for example, along an inner portion 44a of the outer spar region 44, as illustrated in Fig. 5. Once the shear webs 50, 52 converge to dₜ, the distance between the shear webs 50, 52 may be held generally constant in the direction toward the tip end 30 of the blade 20 for at least a portion therof. This may occur, for example, along an outer portion 44b of the outer spar region 44. Fig. 7 illustrates a cross-sectional view of the blade 20 taken along the outer portion 44b of the outer spar region 44. As noted above, the threshold value dₜ may be selected to provide a certain behavior to the blade 20 and, in an exemplary embodiment, may be between about zero and about 50% chord. Other values are also possible depending on the specific application. Fig. 8 illustrates a schematic graph of the distance between the shear webs 50, 52 in accordance with the embodiment described above.

As noted above, in one embodiment, the two shear webs 50, 52 may converge to form a single shear web 70 in the outer portion 44b of the outer spar region 44. In this regard, Fig. 9 illustrates a cross-sectional view of the blade 20 taken along the outer portion 44b of the outer spar region 44 in such an embodiment. In this embodiment, the spar 26 has an I-beam configuration, which may provide an optimization in the reduction of the torsional rigidity of the blade 20 in at least a portion of the outer spar region 44.

In the examples shown in Figs. 5-9, the inner spar region 42 was of the type having a generally constant distance d₁ between the shear webs 50, 52 at least along the portion adjacent the outer spar region 44. Aspects of the invention, and in particular, the configuration of the outer spar region 44, also applies when the inner spar region 42 is of the type having a variation in the distance d₁ between the shear webs 50, 52, including a variation in the portion adjacent the outer spar region 44. However, in this embodiment, the convergence of the shear webs 50, 52 in the outer spar region 44 is configured to occur at a rate greater than that which occurs in the inner spar region 42 should, for example, the variation relationship of the inner spar region 42 be extrapolated into the outer spar region 44. Thus, the rate of convergence in the outer spar region 44 is greater than the convergence of the shear webs 50, 52 as a result of the decrease in the width or chord of the blade 20 in the direction toward the root end 30.

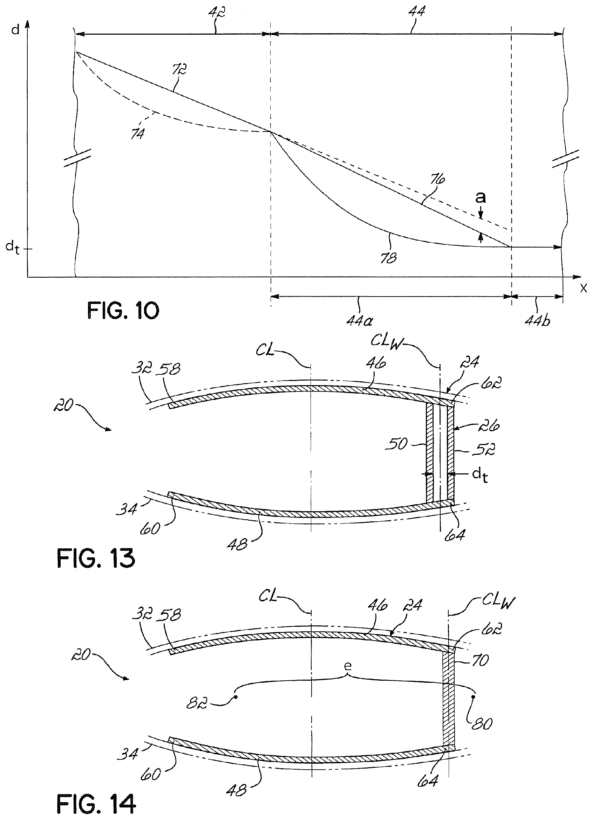

Fig. 10 is a schematic illustration similar to Fig. 8 of this embodiment. As shown in this figure, the distance between shear webs 50, 52 in the inner spar region 42 varies according to some relationship. For purposes of illustration, two exemplary variations, including a linear relationship 72 and an exponential relationship 74, are schematically shown in the inner spar region 42. Of course, other variation relationships may exist in the inner spar region 42 and aspects of the invention are not limited to those shown in Fig. 10. Beginning at the transition between the inner and outer regions 42, 44, the rate of change (e.g., slope) in the distance between the shear webs 50, 52, which may be quantified as a convergence rate, increases at least relative to the rate of change in the distance immediately adjacent the outer spar region 44. Again, for purposes of illustration, a linear relationship 76 and exponential relationship 78 are shown. It is clear from this figure that the convergence rate has increased over that immediately preceding the outer spar region 44. Thus, there is an increased contribution to the convergence of the shear webs relative to the behavior in the inner spar region 42. This contribution may be illustrated, for example, by extrapolating the linear variation curve 72 of the inner spar region 42 into the outer spar region 44 (dashed line) and noting the difference a that results from the increase in the rate of convergence in the outer spar region 44.

Similar to the above, the shear webs 50, 52 along the inner portion 44a of the outer spar region 44 may converge until the distance d₂ therebetween reaches a certain threshold value dₜ. Once the shear webs 50, 52 converge to dₜ, the distance between the shear webs 50, 52 may be held generally constant along at least a portion of the outer portion 44b of the outer spar region 44 and in the direction toward the tip end 30 of the blade 20. Alternatively, and similar to that shown in Fig. 9, the shear webs 50, 52 may converge to form a single shear web 70 in the outer portion 44b of the outer spar region 44, and thus provide an I-beam configuration that may optimize the reduction of the torsional rigidity of the blade 20 in at least a portion of the outer spar region 44.

In the above embodiments, the distance between the shear webs 50, 52 was decreased so as to effectively reduce the torsional rigidity of the spar 26, and thus blade 20, thereby providing a mechanism for providing or enhancing a bend-twist coupling. In other words, along at least the outer spar region 44, the torsional rigidity is reduced to a level that permits twisting of the blade 20 based on bending moment loading. This bend-twist coupling then effectuates a passive control for the reduction in the loading of the wind turbine blade 20. While the mechanism of reduced torsional rigidity may be used alone to provide or enhance the bend-twist coupling to blade 20, it should be recognized that this mechanism may alternatively be used in combination with other mechanisms for providing or enhancing a bend-twist coupling. For example, aspects of the present invention described above, and more specifically the converging nature of the shear webs, may be used in combination with providing a bend-twist coupling by creating an eccentricity between the localized shear centers and the aerodynamic centers of the blade.

In this regard, it should be noted that in the embodiments described above, the convergence of the two shear webs 50, 52 toward each other was performed in a symmetric manner relative to a centerline CL of the spar 26. Thus, for example, the convergence rate at which the shear web 50 moved toward the centerline CL was substantially equal to the convergence rate at which the shear web 52 moved toward the centerline CL. In an alternative embodiment, however, the movement of the shear webs 50, 52 may be performed in an asymmetric manner. In this regard, the rate at which the shear web 50 moves in the direction of shear web 52, and the rate at which the shear web 52 moves in the direction of shear web 50 may differ. When the respective shear webs 50, 52 are moved in an asymmetric manner, a centerline between the two shear webs, denoted by CL_{w}, may not generally coincide with the centerline CL of the spar 26, but may be to one side of the spar centerline CL.

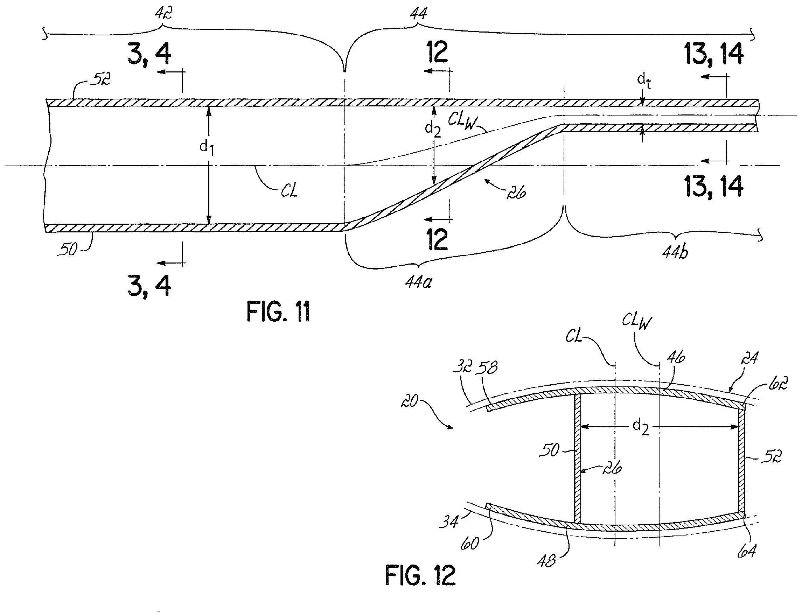

Fig. 11, which is a view similar to Fig. 5, illustrates one example where the shear webs 50, 52 are moved in an asymmetric manner. In this example, a cross section taken through the inner spar region 42 may have the profile shown in Fig. 3 (e.g., box-like configuration) having, for example, a generally constant distance d₁ between the shear webs 50, 52 at least along the portion adjacent the outer spar region 44. Alternatively, the cross section taken through the inner spar region 42 may have a profile similar to that shown in Fig. 4 and again having a generally constant distance d₁ between the shear webs 50, 52. In a further alternative, the distance between the shear webs 50, 52 may vary, such as in the manner described more fully above.

In any event, beginning in the inner portion 44a of the outer spar portion 44, the shear web 52 may remain stationary relative to the centerline CL of the spar 26 (i.e., the convergence rate of shear web 52 in the direction of shear web 50 may be substantially zero), while the shear web 50 moves in the direction of shear web 52. It should be recognized that while a linear relationship is illustrated in Fig. 11, the shear web 50 may converge relative to the shear web 52 according to another relationship including, for example, those discussed above. Fig. 12 illustrates a cross section of the blade 20 taken along the inner portion 44a of the outer spar region 44. Similar to the above, when the distance between the shear webs 50, 52 reaches a threshold value dₜ, the distance between the shear webs 50, 52 may be held generally constant in the direction toward the tip end 30 of the blade 20 and in the outer portion 44b of outer spar region 44 for at least a portion thereof. Fig. 13 illustrates a cross section of the blade 20 taken along the outer portion 44b of the outer spar region 44 for this embodiment. It should be recognized that in an alternative, the shear webs 50, 52 may converge to single shear web 70 along the outer portion 44b of the outer spar region 44, similar to that shown in Fig. 9. A cross section of the blade 20 taken along the outer portion 44b in this embodiment is illustrated in Fig. 14.

The asymmetries in the outer spar region 44, as illustrated in Figs. 12-14 result in an eccentricity e between the localized shear center 80 and the aerodynamic center 82 at a section of the blade 20 (Fig. 14). As discussed above, the eccentricity e between these two centers results in a localized twisting moment in a corresponding section of the blade 20 in a first direction (e.g., a stall direction away from a zero angle of attack) in response to an increase in the bending moment load on the blade 20, from a wind gust for example. More particularly, the twisting of the section of the blade 20 affects the loading on the blade 20 and may be configured to reduce the loading of the blade 20. Thus, the embodiments illustrated in Figs. 11-14 may use both mechanisms for passively controlling the reduction in aerodynamic load on a wind turbine blade via a bend-twist coupling.

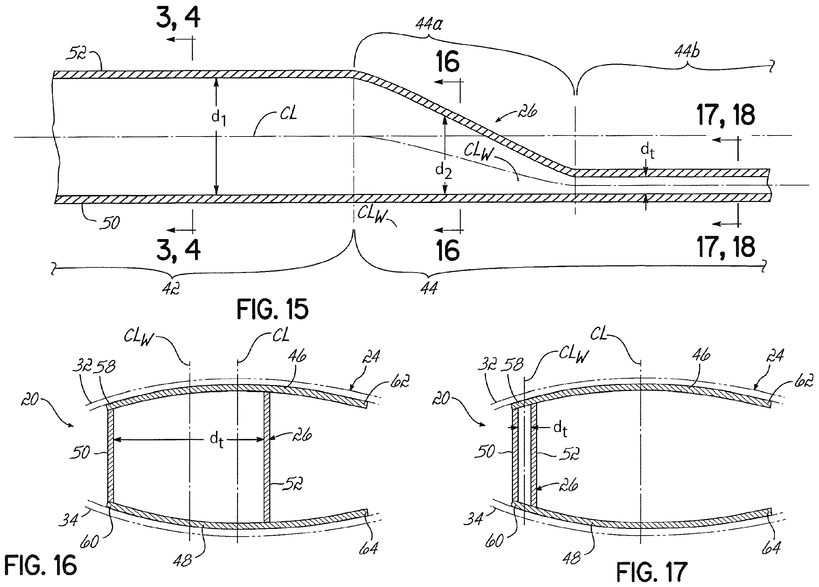

Fig. 15 illustrates another example where in the shear webs 50, 52 are moved in an asymmetric manner. In this example, a cross section taken through the inner spar region 42 may have the profile shown in Fig. 3 (e.g., box-like configuration) having, for example, a generally constant distance d₁ between the shear webs 50, 52 at least along the portion adjacent the outer spar region 44. Alternatively, the cross section taken through the inner spar region 42 may have a profile similar to that shown in Fig. 4 and again have a generally constant distance d₁ between the shear webs 50, 52. In a further alternative, the distance between the shear webs 50, 52 may vary, such as in the manner described more fully above.

In any event, beginning in the inner portion 44a of the outer spar portion 44, the shear web 50 may remain stationary relative to the centerline CL of the spar 26 (i.e., the convergence rate of shear web 50 in the direction of shear web 52 is substantially zero), while the shear web 52 moves in the the blade 20 or provide other beneficial behavior. Thus, the examples illustrated in Figs. 16-18 may use both mechanisms for passively controlling the reduction in aerodynamic load on a wind turbine blade via a bend-twist coupling.

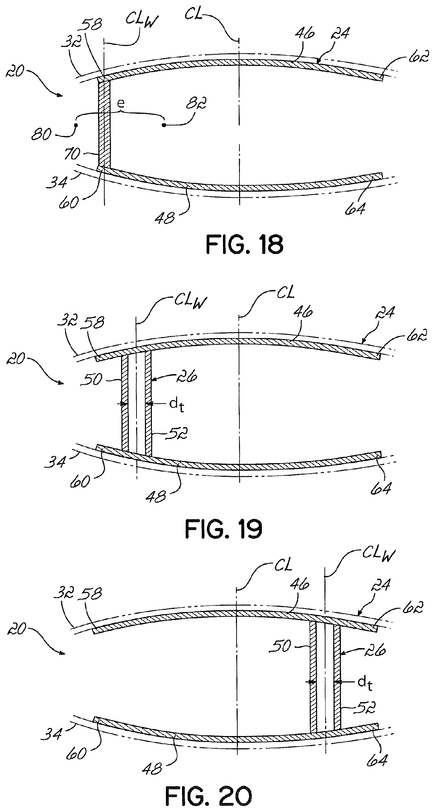

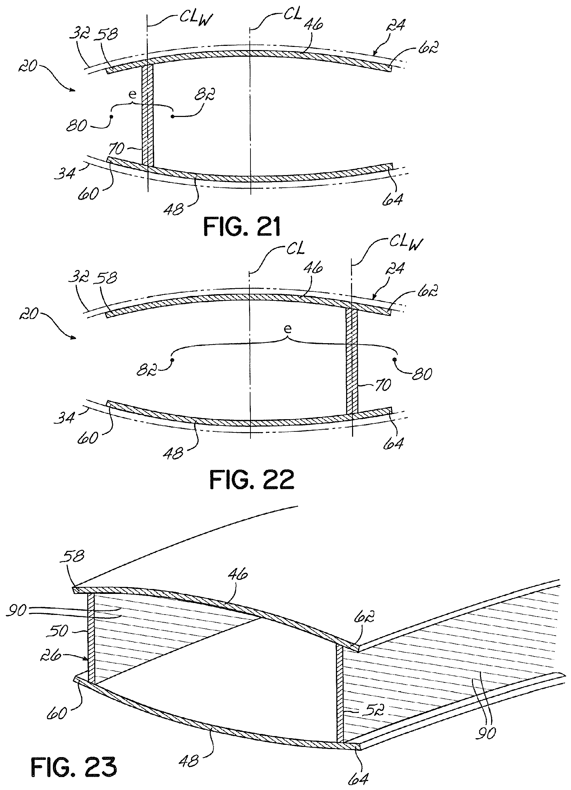

While the examples described in Figs. 11-18 kept one of the shear webs 50, 52 stationary while only moving the other of the shear webs 50, 52, aspects of the invention are not so limited. In this regard, both shear webs 50, 52 may be moved toward the other, but by different amounts or rates. Such spar configurations are illustrated in Figs. 19 and 20, wherein the centerline CL_{w} is offset from the centerline CL of the spar 26. When the centerline CL_{w} between the webs 50, 52 is offset from the centerline CL of the spar 26, this second mechanism for providing a bend-twist coupling may be active and compliment the reduction in torsional rigidity afforded by the converging shear webs 50, 52 as described above. In a further alternative embodiment, and similar to Figs. 19 and 20, in the case the two shear webs 50, 52 converge to a single shear web 70, the single web 70 may also be located other than at the centerline CL of the spar 26, or substantially at one of the spar cap edges. Such alternative embodiments are illustrated in Figs. 21 and 22.

Another mechanism which may be used to provide for a bend-twist coupling includes providing an off-axis orientation in the fibers that form the shear webs 50, 52. Of course, the fiber orientation mechanism may be used alone or in combination with the torsional rigidity reduction resulting from converging shear webs as discussed in various embodiments above. the blade 20 or provide other beneficial behavior. Thus, the embodiment illustrated in Figs. 16-18 may use both mechanisms for passively controlling the reduction in aerodynamic load on a wind turbine blade via a bend-twist coupling.

While the embodiments described in Figs. 11-18 kept one of the shear webs 50, 52 stationary while only moving the other of the shear webs 50, 52, aspects of the invention are not so limited. In this regard, both shear webs 50, 52 may be moved toward the other, but by different amounts or rates. Such spar configurations are illustrated in Figs. 19 and 20, wherein the centerline CL_{w} is offset from the centerline CL of the spar 26. When the centerline CL_{w} between the webs 50, 52 is offset from the centerline CL of the spar 26, this second mechanism for providing a bend-twist coupling may be active and compliment the reduction in torsional rigidity afforded by the converging shear webs 50, 52 as described above. In a further alternative embodiment, and similar to Figs. 19 and 20, in the case the two shear webs 50, 52 converge to a single shear web 70, the single web 70 may also be located other than at the centerline CL of the spar 26, or substantially at one of the spar cap edges. Such alternative embodiments are illustrated in Figs. 21 and 22.

Another mechanism which may be used to provide for a bend-twist coupling includes providing an off-axis orientation in the fibers that form the shear webs 50, 52. Of course, the fiber orientation mechanism may be used alone or in combination with the torsional rigidity reduction resulting from converging shear webs as discussed in various embodiments above. Moreover, it should be recognized that the fiber orientation mechanism may also be used in combination with the mechanism providing for an offset in the localized shear center and aerodynamic center alone or in further combination with the mechanism providing for a reduction in the torsional rigidity through, for example, converging shear webs. Thus, various combinations and permutations are possible in accordance with embodiments of the present invention.

In this regard, Fig. 23 illustrates an embodiment wherein the off-axis fibers, denoted by reference numeral 90, such as carbon or glass fibers, that make up the shear webs 50, 52 are oriented at an angle other than 45 degrees relative to the longitudinal direction. The angled hatching of the webs 50, 52 in this figure denote the angled orientation of the fibers 90. By way of example and not limitation, the fibers 90 may be oriented between about +/-20 degrees and about +/- 70 degrees. Preferably, the fibers 90 are oriented at about +/- 20-30 degrees. In any event, providing an off-axis orientation to the fibers 90 that make up the shear webs 50, 52 provides for or enhances a bend-twist coupling that produces a twisting moment in response to bending of the blade caused by the aerodynamic loading of the blade 20. Additionally, the spar caps 46, 48 may also have fibers 92 with a preferential fiber orientation that may further assist the bend-twist coupling. It should be noted that the fiber orientation mechanism discussed above for providing or enhancing the bend-twist coupling may be implemented in any of the spar designs shown in Figs. 3-22 and be within the scope of the present invention.

In summary, it has become desirable to provide a passive control system for aerodynamic load reduction in a wind turbine blade. Accordingly, wind turbine and wind turbine blade manufacturers continually seek new designs and features that provide or improve upon such passive control systems. Aspects of the invention accomplish this by providing or enhancing a bend-twist coupling in the blade. A bend-twist coupling produces a twist moment in response to bending of the blade caused by aerodynamic loading. Aspects of the present invention provide and/or enhance the bend-twist coupling through reducing the torsional rigidity of the blade and therefore relaxing the resistance against twisting of the blade in at least a portion of the blade, and preferably an outer portion of the blade. In various embodiments, this may be accomplished through convergence of the shear webs toward each other. This mechanism of reducing the torsional rigidity of the blade may be used alone or in combination with other mechanisms. By way of example, the convergence of the shear webs may be implemented in such a manner as to cause an asymmetry in the spar configuration that, in turn, results in an eccentricity between the blade shear centers and the blade aerodynamic centers that extend along the length of the blade. This eccentricity is known to provide a bend-twist coupling that may be used in such passive control systems of load reduction. Additionally or alternatively, off-axis fiber orientation may be used to provide and/or enhance the bend-twist coupling.

One or more of these mechanisms provide designers and manufacturers with greater options when designing a wind turbine blade. For example, it may be desirable to vary the bend-twist coupling depending on the position along the length of the blade. This may be achieved, for example, through manipulation of one or more of the mechanism described above. By way of example, depending of the specific application, it may be desirable to have a first blade portion that twists in a first direction (toward the zero angle of attack position) as a result of the bending moments acting on the blade, and a second blade portion that twists in a second direction (away from the zero angle of attach position) as a result of the bending moments acting on the blade, or vice versa. Aspects of the present invention provide blade designers with greater options when developing such a blade.

While the invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. For example, aspects of the invention, and more particularly, the converging nature of the shear webs may be implemented on spar designs having no spar caps. Thus, the invention in its broader aspects is therefore not limited to the specific details, representative methods, and illustrative examples shown and described. Accordingly, departures may be made from such details without departing from the scope of the general inventive concept.

## Claims

1. A wind turbine blade (20), comprising:
an outer airfoil shell (24) defining an upper shell half (32), a lower shell half (34), a leading edge (36), and a trailing edge (38) of the blade; and
a spar (26) disposed generally within the outer airfoil shell and defining an inner spar region (42) and an outer spar region (44), the spar comprising:
a first shear web (50) generally extending between the upper and lower shell halves; and
a second shear web (52) generally extending between the upper and lower shell halves, the first and second shear webs being spaced from each other along at least a portion of the inner spar region,
**characterised in that** the first and second shear webs (50, 52) converge toward each other at a first convergence rate such that there is a variation in the distance between the shear webs in at least a portion of the inner spar (42) region adjacent the outer spar region, and the first and second shear (50, 52) webs converge toward each other at a second convergence rate in at least a portion of the outer spar region (44) adjacent the inner spar region that is greater than the first convergence rate.

2. The wind turbine blade according to claim 1, wherein the spar (26) further includes a first spar cap (46) associated with the upper shell half (32) and a second spar cap (48) associated with the lower shell half (34), the first and second spar caps being coupled to the first and second shear webs (50, 52) so as to have a box-like configuration in at least the inner spar region (42).

3. The wind turbine blade according to claim 1, wherein the spar (26) further includes a first spar cap (46) having opposed edges associated with the upper shell half (32) and a second spar cap (48) having opposed edges associated with the lower shell half (34), the first and second spar caps being coupled to the first and second shear webs (50, 52) such that the first and second shear webs are spaced from the edges of the spar caps in at least the inner spar region.

4. The wind turbine blade according to any of the preceding claims, wherein the first and second shear webs (50, 52) converge toward each other to form a single shear web (70) in the outer spar region (44).

5. The wind turbine blade according to claim 4, wherein the single shear web (70) aligns with a centerline of the spar.

6. The wind turbine blade according to claim 4, wherein the single shear web (70) is spaced from a centerline of the spar.

7. The wind turbine blade according to claim 6, wherein in the outer spar region (44) the spar further includes a first spar cap (46) having opposed edges associated with the upper shell half (32) and a second spar cap (48) having opposed edges associated with the lower shell half (34), the single shear web (70) being coupled to the first and second spar caps at a corresponding edge thereof.

8. The wind turbine blade according to any of claims 1-3, wherein the first and second shear webs (50 ,52) converge toward each other in the outer spar region (44) until the distance therebetween reaches a threshold value at which point the distance between the first and second shear webs remains substantially constant.

9. The wind turbine blade according to claim 8, wherein in the portion of the outer spar region (44) where the distance between the first and second shear webs remains substantially constant, a centerline between the first and second shear webs (50, 52) aligns with a centerline of the spar.

10. The wind turbine blade according to claim 8, wherein in the portion of the outer spar region (44) where the distance between the first and second shear webs remains substantially constant, a centerline between the first and second shear webs (50, 52) is spaced from a centerline of the spar.

11. The wind turbine blade according to claim 10, wherein the spar further includes a first spar cap (46) having opposed edges associated with the upper shell half (32) and a second spar cap (48) having opposed edges associated with the lower shell half (34), one of the first or second shear webs (50, 52) being coupled to the first and second spar caps at a corresponding edge thereof.

12. A wind turbine, comprising:
a tower (12);
a nacelle (14) located adjacent a top of the tower;
a rotor (16) coupled to the nacelle and having a hub and a plurality of blades (20) according to any one of the preceding claims.

13. A method of making a wind turbine blade (20), comprising:
forming a spar (26) having at least a first and second shear web (50, 52) along at least a portion of an inner spar region (42) and an outer spar region (44), the forming step further comprising;
converging the first and second shear webs (50, 52) toward each other such that there is a variation in the distance between the shear webs at a first convergence rate in at least a portion of the inner spar region (42) adjacent to the outer spar region (44); and
converging the first and second shear webs (50, 52) toward each other at a second convergence rate that is greater than the first convergence rate in at least a portion of the outer spar region (44) adjacent to the inner spar region (42); and
disposing the spar (26) within an outer airfoil shell (24).

14. The method of claim 13, further comprising converging the first and second shear webs (50, 52) in the outer spar region (44) so as to form a single shear web (70).

15. The method of claim 13 or 14, further comprising:
converging the first and second shear webs (50, 52) in the outer spar region (44) until the distance therebetween reaches a threshold value; and
maintaining the distance between the first and second shear (50, 52) webs substantially constant for at least a portion thereafter.

## Patentansprüche

1. Windturbinenblatt (20), umfassend:
eine äußere Tragflächenhülle (24), die eine obere Hüllenhälfte (32), eine untere Hüllenhälfte (34), eine Vorderkante (36) und eine Hinterkante (38) des Blattes definiert; und
einen Holm (26), der im Allgemeinen innerhalb der äußeren Tragflächenhülle angeordnet ist und einen inneren Holmbereich (42) und einen äußeren Holmbereich (44) definiert, wobei der Holm umfasst:
einen ersten Schersteg (50), der sich im Allgemeinen zwischen den oberen und unteren Hüllenhälften erstreckt; und
einen zweiten Schersteg (52), der sich im Allgemeinen zwischen den oberen und unteren Hüllenhälften erstreckt, wobei der erste und zweite Schersteg entlang zumindest eines Teils des inneren Holmbereichs voneinander mit Abstand angeordnet sind,
**dadurch gekennzeichnet, dass** der erste und zweite Schersteg (50, 52) sich einander annähern mit einer ersten Annäherungsrate derart, dass es eine Variation im Abstand zwischen den Scherstegen in mindestens einem Teil des Bereichs des inneren Holms (42) angrenzend an den äußeren Holmbereich gibt, und der erste und zweite Schersteg (50, 52) laufen aufeinander zu mit einer zweiten Annäherungsrate in mindestens einem Teil des äußeren Holmbereichs (44) angrenzend an den inneren Holmbereich, die größer als die erste Annäherungsrate ist.

2. Windturbinenblatt nach Anspruch 1, wobei der Holm (26) ferner eine erste Holmkappe (46) umfasst, die mit der oberen Hüllenhälfte (32) verbunden ist, und eine zweite Holmkappe (48), die mit der unteren Hüllenhälfte (34) verbunden ist, wobei die erste und zweite Holmkappe mit dem ersten und zweiten Schersteg (50, 52) verbunden sind, so eine kastenähnlichen Aufbau zumindest im inneren Holmbereich (42) zu erhalten.

3. Turbinenblatt nach Anspruch 1, wobei der Holm (26) ferner eine erste Holmkappe (46) umfasst, bei der entgegengesetzten bekannten mit der oberen Hüllenhälfte (32) verbunden sind, und eine zweite Holmkappe (48) entgegengesetzte Kanten hat, die mit der unteren Hüllenhälfte (34) verbunden sind, wobei die erste und zweite Holmkappe mit dem ersten und zweiten Schersteg (50, 52) derart verbunden sind, dass der erste und zweite Schersteg mit Abstand von den Kanten der Holmkappen zumindest im Inneren Holmbereich angeordnet sind.

4. Windturbinenblatt nach einem der vorhergehenden Ansprüche, wobei der erste und zweite Schersteg (50, 52) aufeinander zu laufen, um einen einzigen Schersteg (70) im äußeren Holmbereich (44) zu bilden.

5. Windturbinenplatz nach Anspruch 4, wobei der einzelne Schersteg (70) nach einer Mittellinie des Holms ausgerichtet ist.

6. Windturbinenblatt nach Anspruch 4, wobei der einzelne Schersteg (70) mit Abstand von einer Mittellinie des Holms angeordnet ist.

7. Windturbinenblatt nach Anspruch 6, wobei im äußeren Holmbereich (44) der hohen ferner eine erste Holmkappe (46) umfasst, die entgegengesetzte Kanten hat, welche mit der oberen Hüllenhälfte (32) verbunden sind, und eine zweite Holmkappe (48), die entgegengesetzte Kanten hat, welche mit der unteren Hüllenhälfte (34) verbunden sind, wobei der einzelne Schersteg (70) mit den ersten und zweiten Holmkappen an einer entsprechenden Kante derselben verbunden ist.

8. Windturbinenblattes nach einem der Ansprüche 1 bis 3, wobei der erste und zweite Schersteg (50, 52) aufeinander zu laufen im äußeren Holmbereich (44), bis der Abstand dazwischen einen Schwellwert erreicht, an dem der Abstand zwischen dem ersten und zweiten Schersteg im Wesentlichen konstant bleibt.

9. Windturbinenblatt nach Anspruch 8, wobei im Teil des äußeren Holmbereichs (44), wo der Abstand zwischen dem ersten und zweiten Schersteg im Wesentlichen konstant bleibt, eine Mittellinie zwischen dem ersten und zweiten Schersteg (50, 52) sich auf eine Mittellinie des Holms ausrichtet.

10. Windturbinenblatt nach Anspruch 8, wobei im Teil des äußeren Holmbereichs (44), wo der Abstand zwischen dem ersten und zweiten Schersteg im Wesentlichen konstant bleibt, eine Mittellinie zwischen dem ersten und zweiten Schersteg (50, 52) einen Abstand von einer Mittellinie des Holms hat.

11. Windturbinenblatt nach Anspruch 10, wobei der Holm ferner eine erste Holmkappe (46) umfasst, die entgegengesetzte Kanten hat, welcher mit der oberen Hüllenhälfte (32) verbunden sind, und eine zweite Holmkappe (48), die entgegengesetzte Kanten hat, welcher mit der unteren Hüllenhälfte (34) verbunden sind, wobei ein Schersteg aus dem ersten oder zweiten Schersteg (50, 52) mit den ersten und zweiten Holmkappen an einer entsprechenden Kante derselben verbunden ist.

12. Windturbine, umfassend:
einen Turm (12);
eine Gondel (14), die sich an der Spitze des Turms befindet;
einen Rotor (16), der mit der Gondel verbunden ist und eine Nabe und mehrere Blätter (20) nach einem der vorhergehenden Ansprüche hat.

13. Verfahren zum Herstellen eines Windturbinenblattes (20), umfassend:
Bilden eines Holms (26), der mindestens einen ersten und zweiten Schersteg (50, 52) entlang zumindest eines Teils eines inneren Holmbereichs (42) hat, und einen äußeren Holmbereich (44), wobei der Bildungsschritt ferner umfasst:
Annähern des ersten und zweiten Scherstegs (50, 52) aneinander derart, dass es eine Variation im Abstand zwischen den Scherstegen mit einer ersten Annäherungsrate in mindestens einem Teil des inneren Holmbereichs (42) angrenzend an den äußeren Holmbereich (44) gibt; und
Annähern des ersten und zweiten Scherstegs (50, 52) aneinander mit einer zweiten Annäherungsrate, die größer als die erste Annäherungsrate ist, in mindestens einem Teil des äußeren Holmbereichs (44) angrenzend an den inneren Holmbereich (42); und
Anordnen des Holms (26) innerhalb einer äußeren Tragflächenhülle (24).

14. Verfahren nach Anspruch 13, dass ferner das annähern des ersten und zweiten Scherstegs (50, 52) im äußeren Holmbereich (44) umfasst, um so einen einzelnen Schersteg (70) zu bilden.

15. Verfahren nach Anspruch 13 oder 14, ferner umfassend:
Annähern des ersten und zweiten Scherstegs (50, 52) im äußeren Holmbereich (44), bis der Abstand dazwischen einen Schwellwert erreicht; und Aufrechterhalten des Abstandes zwischen dem ersten und zweiten Schersteg (50, 52) mit einem im Wesentlichen konstanten Wert zumindest für einen Teil danach.

## Revendications

1. Pale d'éolienne (20), comprenant :
une coque de profil d'aile extérieur (24) définissant une moitié de coque supérieure (32), une moitié de coque inférieure (34), un bord d'attaque (36) et un bord de fuite (38) de la pale ; et
une poutre (26) disposée généralement dans la coque de profil d'aile extérieur et définissant une région de poutre intérieure (42) et une région de poutre extérieure (44), la poutre comprenant :
une première traverse de cisaillement (50) s'étendant généralement entre les moitiés de coque supérieure et inférieure ; et
une seconde traverse de cisaillement (52) s'étendant généralement entre les moitiés de coque supérieure et inférieure, les première et seconde traverses de cisaillement étant espacées l'une de l'autre le long d'au moins une partie de la région de poutre intérieure,
**caractérisée en ce que** les première et seconde traverses de cisaillement (50, 52) convergent l'une vers l'autre à une première vitesse de convergence de sorte qu'il y ait une variation de la distance entre les traverses de cisaillement dans au moins une partie de la région de poutre intérieure (42) adjacente à la région de poutre extérieure, et les première et seconde traverses de cisaillement (50, 52) convergent l'une vers l'autre à une seconde vitesse de convergence dans au moins une partie de la région de poutre extérieure (44) adjacente à la région de poutre intérieure qui est plus grande que la première vitesse de convergence.

2. Pale d'éolienne selon la revendication 1, dans laquelle la poutre (26) comprend en outre un premier raidisseur longitudinal (46) associé à la moitié de coque supérieure (32) et un second raidisseur longitudinal (48) associé à la moitié de coque inférieure (34), les premier et second raidisseurs longitudinaux étant couplés aux première et seconde traverses de cisaillement (50, 52) de sorte à avoir une configuration de type boîte dans au moins la région de poutre intérieure (42).

3. Pale d'éolienne selon la revendication 1, dans laquelle la poutre (26) comprend en outre un premier raidisseur longitudinal (46) présentant des bords opposés associé à la moitié de coque supérieure (32) et un second raidisseur longitudinal (48) présentant des bords opposés associé à la moitié de coque inférieure (34), les premier et second raidisseurs longitudinaux étant couplés aux première et seconde traverses de cisaillement (50, 52) de sorte que les première et seconde traverses de cisaillement soient espacées des bords des raidisseurs longitudinaux dans au moins la région de poutre intérieure.

4. Pale d'éolienne selon l'une quelconque des revendications précédentes, dans lequel les première et seconde traverses de cisaillement (50, 52) convergent l'une vers l'autre pour former une seule traverse de cisaillement (70) dans la région de poutre extérieure (44).

5. Pale d'éolienne selon la revendication 4, dans laquelle la seule traverse de cisaillement (70) s'aligne avec une ligne centrale de la poutre.

6. Pale d'éolienne selon la revendication 4, dans laquelle la seule traverse de cisaillement (70) est espacée d'une ligne centrale de la poutre.

7. Pale d'éolienne selon la revendication 6, dans laquelle dans la région de poutre extérieure (44), la poutre inclut en outre un premier raidisseur longitudinal (46) présentant des bords opposés associé à la moitié de coque supérieure (32) et un second raidisseur longitudinal (48) présentant des bords opposés associé à la moitié de coque inférieure (34), la seule traverse de cisaillement (70) étant couplée aux premier et second raidisseurs longitudinaux sur un bord correspondant de ceux-ci.

8. Pale d'éolienne selon l'une quelconque des revendications 1 à 3, dans laquelle les première et seconde traverses de cisaillement (50, 52) convergent l'une vers l'autre dans la région de poutre extérieure (44) jusqu'à ce que la distance entre elles atteigne une valeur seuil, auquel point la distance entre les première et seconde traverses de cisaillement reste sensiblement constante.

9. Pale d'éolienne selon la revendication 8, dans laquelle dans la partie de la région de poutre extérieure (44) où la distance entre les première et seconde traverses de cisaillement reste sensiblement constante, une ligne centrale entre les première et seconde traverses de cisaillement (50, 52) s'aligne avec une ligne centrale de la poutre.

10. Pale d'éolienne selon la revendication 8, dans laquelle dans la partie de la région de poutre extérieure (44) où la distance entre les première et seconde traverses de cisaillement reste sensiblement constante, une ligne centrale entre les première et seconde traverses de cisaillement (50, 52) est espacée d'une ligne centrale de la poutre.

11. Pale d'éolienne selon la revendication 10, dans laquelle la poutre inclut en outre un premier raidisseur longitudinal (46) présentant des bords opposés associé à la moitié de coque supérieure (32) et un second raidisseur longitudinal (48) présentant des bords opposés associé à la moitié de coque inférieure (34), une des première ou seconde traverses de cisaillement (50, 52) étant couplée aux premier et second raidisseurs longitudinaux sur un bord correspondant de ceux-ci.

12. Eolienne, comprenant :
une tour (12) ;
une nacelle (14) située de manière adjacente à un dessus de la tour ;
un rotor (16) couplé à la nacelle et présentant un moyeu et une pluralité de pales (20) selon l'une quelconque des revendications précédentes.

13. Procédé de fabrication d'une pale d'éolienne (20), comprenant :
la formation d'une poutre (26) présentant au moins une première et une seconde traverse de cisaillement (50, 52) le long d'au moins une partie d'une région de poutre intérieure (42) et une région de poutre extérieure (44), l'étape de formation comprenant en outre :
la convergence des première et seconde traverses de cisaillement (50, 52) l'une vers l'autre de sorte qu'il y ait une variation de la distance entre les traverses de cisaillement à une première vitesse de convergence dans au moins une partie de la région de poutre intérieure (42) adjacente à la région de poutre extérieure (44) ; et
la convergence des première et seconde traverses de cisaillement (50, 52) l'une vers l'autre à une seconde vitesse de convergence qui est plus grande que la première vitesse de convergence dans au moins une partie de la région de poutre extérieure (44) adjacente à la région de poutre intérieure (42) ; et
la disposition de la poutre (26) dans une coque de profil d'aile extérieure (24).

14. Procédé selon la revendication 13, comprenant en outre la convergence des première et seconde traverses de cisaillement (50, 52) dans la région de poutre extérieure (44) de sorte à former une seule traverse de cisaillement (70).

15. Procédé selon la revendication 13 ou 14, comprenant en outre :
la convergence des première et seconde traverses de cisaillement (50, 52) dans la région de poutre extérieure (44) jusqu'à ce que la distance entre celles-ci atteigne une valeur seuil ; et
le maintien de la distance entre les première et seconde traverses (50, 52) de cisaillement sensiblement constante pour au moins une partie après celles-ci.
